# EUROPEAN PATENT APPLICATION

(11) **EP 4 307 155 A1**
(43) Date of publication of application: **17.01.2024**
(21) Application number: 23184369.9
(22) Date of filing: 10.07.2023
(51) Int. Cl.: G06F 21/75, H04L 9/00

(54) **METHOD AND CIRCUIT FOR PROTECTING AN ELECTRONIC DEVICE FROM A SIDE-CHANNEL ATTACK**

(30) Priority: 13.07.2022 US 202217812244
(71) Applicant: NXP B.V., 5656 AG Eindhoven (NL)
(72) Inventor: Connor, Jack, 5656AG Eindhoven (NL); Veshchikov, Nikita, 5656AG Eindhoven (NL); Pape, Lutz, 5656AG Eindhoven (NL)
(74) Representative: Krott, Michel

(57) **Abstract**

A method is provided for protecting an electronic device from a side-channel attack (SCA). The method includes providing a plurality of countermeasures that are for protecting the electronic device from the SCA. A set of countermeasures of the plurality of countermeasures is randomly enabled from the plurality of countermeasures to provide the protection during operation of the electronic device, such as for example, during an encryption operation. The method makes it more difficult for an attacker to construct a template of the electronic device that could be used in the SCA. In another embodiment, an electronic device is provided that incorporates the method.

## Description

### Background

### Field

This disclosure generally relates to electronic circuits, and more particularly, to a method and circuit for protecting an electronic circuit from a side-channel attack (SCA).

### Related Art

Modern IT security largely relies on cryptography. One of the main building blocks of cryptography is encryption. The security of encryption algorithms mainly relies on the secrecy of a special value called a key. Given a good encryption scheme it should be impossible to decrypt a secret message without the knowledge of the necessary secret key.

Many attacks on encryption systems try to extract the secret key from the device that is being used to encrypt or decrypt data. One of the most successful types of attacks against cryptographic devices is commonly called a side-channel attack (SCA). Side-channel attacks try to break the implementation of a cryptographic algorithm. In other words, the SCA is used to extract the secret key from a device that encrypts (or decrypts) data. An SCA uses physical properties of devices to extract the secret key. Examples of the physical properties exploited by SCAs include power consumption, sound produced by the device, or time that the device takes to encrypt data.

Most powerful side-channel attacks use templates (sometimes called models). A template is a model of the leakage of information from the device. In other words, a template describes how a given device leaks information about the secret key through a side-channel such as power consumption.

To build a template an attacker has to use a device similar or identical to the one that is going to be attacked later. Typically, to build a template, the attacker would use a device of the same model and produced by the same manufacturer as the device that he would later attack. The device used by the attacker to build the template is often under full or at least partial control of the attacker i.e., the attacker can encrypt different messages using the device and the attacker also knows the secret key that is used in the device, often the attacker can also set any value of the secret key. In such scenarios the attackers build a template privately in their laboratory (hidden from the rest of the world) and thus it is difficult to find out if someone is building a template to attack a specific device.

Therefore, what is needed is a device and method for protecting a device against a side channel attack.

### Brief Description of the Drawings

The present invention is illustrated by way of example and is not limited by the accompanying figures, in which like references indicate similar elements. Elements in the figures are illustrated for simplicity and clarity and have not necessarily been drawn to scale.
FIG. 1 illustrates a conceptual view of a configurable countermeasure system in accordance with an embodiment.
FIG. 2 illustrates a distribution of countermeasures in a plurality of devices from a hardware manufacturer in accordance with an embodiment.
FIG. 3 illustrates a configurable countermeasure system in accordance with another embodiment.
FIG. 4 illustrates a configurable countermeasure system in accordance with another embodiment.
FIG. 5 illustrates a configurable countermeasure system in accordance with another embodiment.
FIG. 6 illustrates another example of a configurable countermeasure system.
FIG. 7 illustrates a method for protecting an encryption operation from an SCA in accordance with an embodiment.
FIG. 8 illustrates a data processing system for use in a device to be protected from a SCA in accordance with an embodiment.

### Detailed Description

Generally, there is provided, a device, such as a system on a chip (SoC) that includes a plurality of different SCA countermeasures. A mechanism on the device enables different sets of the plurality of countermeasures to alter the physical leakages of the device in different ways depending on the enabled set of countermeasures. In this way, a template created by an attacker on one device becomes inapplicable to another similar device having a different set of countermeasures. When this technique is used, a template built by an attacker on one device is likely to be of a poor quality with respect to the attacked device that is running a different set of countermeasures. Thus, a SCA based on the template will be less likely to succeed.

In accordance with an embodiment, there is provided, a method for protecting an electronic device from a side-channel attack (SCA), the method including: providing a plurality of countermeasures for protecting the electronic device from the SCA; and randomly enabling a set of countermeasures during operation of the electronic device, the set of countermeasures comprising one or more countermeasures of the plurality of countermeasures. Randomly enabling may further include randomly enabling a different set of countermeasures each time a message is encrypted or decrypted by the electronic device. The plurality of countermeasures may include two or more of a group including a masking scheme, noise generator, shuffling scheme, and insertion of dummy operations. One or more additional countermeasures may be enabled based on a parity bit generated in response to whether an odd or even number of countermeasures are enabled in the set of countermeasures. Randomly enabling may further include generating a random number and using the random number to enable the set of countermeasures. The one or more of the plurality of countermeasures may receive a parameter based on the random number. Generating the random number may comprise using a random number generator with one or more of a device identifier, a physical unclonable function (PUF), a counter, and an encryption key as a seed value. The plurality of countermeasures may include one or more countermeasures that are always enabled and one or more of the countermeasures are randomly selected. Randomly enabling may further include randomly enabling a different set of countermeasures for each electronic device of a plurality of electronic devices during manufacturing. The electronic device may include an integrated circuit that performs the method.

In another embodiment, there is provided, a method for protecting against a side-channel attack (SCA) in an electronic device, the method including: providing a plurality of countermeasures for protecting the electronic device from a SCA; generating a random number; and enabling a set of countermeasures based on the random number, the set of countermeasures including one or more countermeasures of the plurality of countermeasures. Enabling a set of countermeasures may further include enabling a different set of countermeasures from a different random number each time a message is encrypted or decrypted by the electronic device. The plurality of countermeasures may include two or more of masking schemes, noise generators, shuffling schemes, insertion of dummy operations. The method may further include generating a parity bit, wherein one or more additional countermeasures are enabled based on the parity bit in response to whether an odd or even number of countermeasures are enabled in the set of countermeasures. The one or more enabled countermeasures of the plurality of countermeasures may receive a parameter based on the random number. Generating the random number may include using a random number generator with one or more of a device identifier, a physical unclonable function (PUF), a counter, and an encryption key as a seed value for the random number generator. The plurality of countermeasures may include one or more countermeasures that are always enabled during operation of the electronic device, and one or more countermeasures that are randomly selected. Randomly enabling may further include randomly enabling a different set of countermeasures for each electronic device of a plurality of electronic devices during manufacturing. The electronic device may include an integrated circuit that performs the method.

In yet another embodiment, there is provided, an electronic device including: a memory configured to store a plurality of countermeasures for protecting against a side-channel attack (SCA); a random number generator configured to generate a random number; and an enablement circuit configured to enable a set of countermeasures in response to the random number, wherein the set of countermeasures comprising one or more of the plurality of countermeasures.

A typical device that implements countermeasures against side-channel attacks may implement several of the countermeasures and they will usually all be active at the same time in one given configuration. Sometimes a manufacturer can envision implementing multiple countermeasures, e.g., five countermeasures while the developer of the final product might only use, e.g., two countermeasures due to some performance requirements or constraints on the system. In any case, from the point of view of the device, the device always uses 2 fixed countermeasures while encrypting. That means that the attacker, while building a template, would always "observe" the device in the same state with respect to countermeasures. That means that the template based on one device would provide a good template for a different device from the same vendor.

In some cases, the same physical device may be used by many entities and each entity may have its own account and secret key. In this case the attacker may use one example of the same device for profiling (building the template) and then the profile used for the attack, which may involve key extraction. If the same set of countermeasures is used for each user that uses a device using a different account, then the attacker's profile would be a good fit for attacking a different user using the same device.

Encryption is used as an example embodiment, but the same scheme can be used for other cryptographic algorithms that use secret keys. Examples of other operations that use secret keys includes decryption, digital signature computation, computation of message authentication code (MAC), authenticated encryption, etc. Moreover, the described embodiments can be used with symmetric cryptographic algorithms as well as with public-key cryptographic algorithms. Also, even though the tracking of cryptographic keys is described, any secret information processed by an algorithm may also be tracked such as a pin code or a password. Moreover, the examples discussed will mostly focus on the use of power analysis (a large family of side-channel attacks) and related countermeasures, but the described protection method can be applied to mitigate other types of side-channel attacks. In some scenarios, the method may also increase the resistance of the device against non-profiled SCAs as well as fault injection attacks.

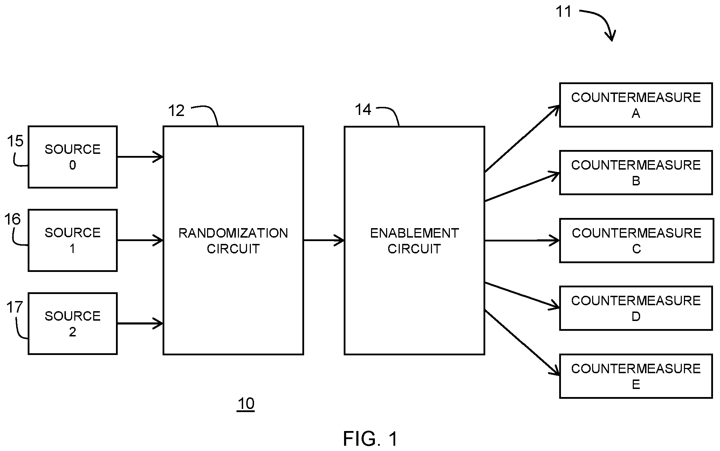

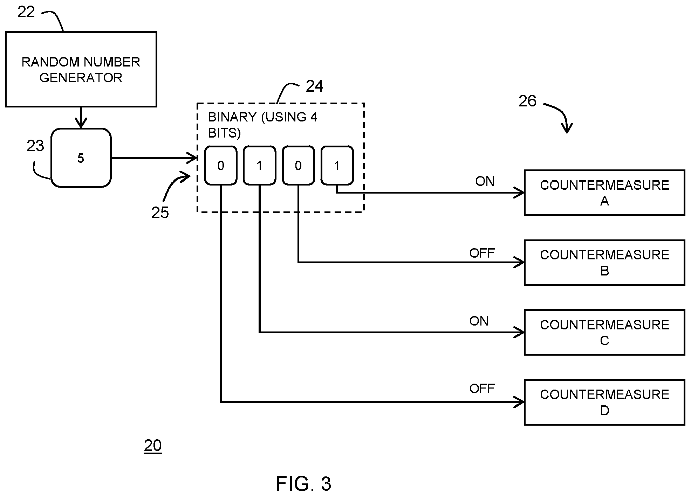

FIG. 1 illustrates a conceptual view of configurable countermeasure system 10 in accordance with an embodiment. Configurable countermeasure system 10 includes randomization circuit 12, enablement circuit 14, and a plurality of countermeasures 11. In one embodiment, randomization circuit 12 provides a number that is used to randomly determine how many and which of the plurality of countermeasures 11 to enable. There are many ways the random number may be generated. In FIG. 1, randomization circuit 12 may receive multiple sources 15 - 17 of information or data to provide the random number. In another embodiment, randomization circuit 12 may be a random number generator (RNG) that receives one or more of sources 15 - 17 as a seed. In other embodiments, a randomized enablement signal may be generated differently. Other embodiments for randomly enabling SCA countermeasures are provided in FIGs. 3-6 and will be discussed below.

The plurality of countermeasures 11 includes countermeasures A - E. Any number of countermeasures greater than one can be used. For the sake of clarity, only a few countermeasures will be used in the described examples. Typical countermeasures against side-channel attacks include masking schemes, shuffling schemes, noise generators, and the use of dummy operations. Moreover, there are multiple masking schemes (additive, multiplicative) that exist and in case of some algorithms many masking schemes can be applied, similarly many shuffling schemes exist (e.g., random permutation and random starting index) that can also be used in cryptographic algorithms. For example, COUNTERMEASURE A may be a masking scheme, COUNTERMEASURE B may be a shuffling scheme, COUNTERMEASURE C may in the insertion of dummy operations and COUNTERMEASURE D may be a noise generator. Configurable countermeasure system 10 may be applied to cryptographic devices that can use multiple countermeasures against SCA.

Activation circuit 14 receives a random number from randomization circuit 12 and enables one or more countermeasures from the plurality of countermeasures 11. There are various ways to implement activation circuit 14.

Randomization circuit 12 provides a random number that is used by activation circuit 14 to enable a set of the plurality of countermeasures 11. It can be done in several different ways. One way may be advantageous over another depending on the application and main attack scenarios that are of concern for the particular type of device or application. Here are some different ways of performing the randomization step based on sources of information that are used. A true random number generator (TRNG) or a pseudo random number generator (PRNG) can be used in randomization circuit 12 for generating a random number to enable a set of countermeasures. Sources 15 - 17 may be used to provide randomization. Examples of multiple sources 15 - 17 as input to randomization circuit 12 include an encryption key, nonce, unique device identifier (UID) physical unclonable function (PUF), a counter value, etc., may be as one of the inputs.

According to an embodiment, randomization circuit 12 combines multiple inputs, mixes them, and crops, if necessary, the result to a required number of bits, e.g., 4-bits. The number of bits may depend on how many countermeasures are to be in plurality of countermeasures 11. The combination and mixing can be done using concatenation and a hash function, the cropping can be done using modular division. Several of these pieces of data and sources of information can be used at the same time for randomization of countermeasure selection. When more than one source is used, the sources may be concatenated, and the result processed using a hash function. This step can help to dissociate the specific set of countermeasures from the values that were used to select them. That is, if an attacker found out which specific countermeasures are enabled and how the entire system works, it is computationally difficult to invert the hash function to find out the values that were used to randomize the configuration. In some cases, the hash value can be omitted, e.g., if only a TRNG is used as a unique source or replaced by a simpler and potentially faster operation such as exclusive OR (XOR). For example, in one embodiment, a PRNG with a UID as a seed are used to generate a random value to enable a set of countermeasures, where the seed may be one or more of the sources mentioned above.

In one embodiment, a random number is generated, and a new set of countermeasures is enabled every time a message is encrypted. This can be achieved by using a TRNG or a PRNG as one of the inputs for the randomization. When the attacker tries to collect data with a key and plaintext values, the attacker will not know which countermeasures are used. Moreover, the entire dataset will contain traces with a variety of different countermeasures enabled and disabled. Thus, changing the set of countermeasures will make it difficult to create a good template for a successful SCA. Note, that if a random number generator is not available then a slightly weaker version of it can be achieved when, e.g., a key and the plaintext, or a simple counter value are used as inputs for randomization. That is, a new set of countermeasures is selected for every combination of key and plaintext. However, in this scenario the attacker will know (if he knows about the countermeasure configuration scheme) that the same set of countermeasures is enabled for a given fixed plaintext & key combination. Still, the attacker will not necessarily know if the same configuration is used for a different key & plaintext.

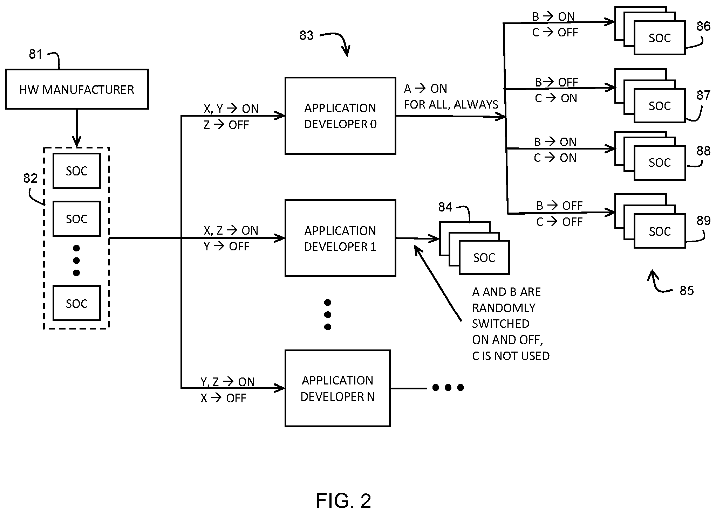

In another embodiment, the set of countermeasures is not changed once the countermeasures are enabled in a device. Each device of the same model and manufacturer will use a randomly selected configuration of countermeasures and for a given device the configuration does not change. In this embodiment, if multiple customers buy the same devices from a hardware (HW) manufacturer and one of the resulting products is less secure due to its application or implementation flaws, an attacker may be able to build a template of that device. In this scenario, the devices may each be configured with different countermeasures and an attacker will not be able to use the device from one application developer to attack a device from another application developer who both use the same device for different applications. Moreover, inside one family of devices all devices can have a randomly chosen configuration, e.g., by using their UlDs as a unique source of randomization. Then, if, e.g., 8 different configurations are possible the attacker would not know which configuration each device has. Therefore, the attacker would have only a small chance of being able to successfully attack one device using a model, or template, from another device. Or the attacker would have to buy many devices and build many models hoping that he'd get a device with the same set of configurations as the target of the attack. It is also possible to use several countermeasures to randomize configurations between customers of a SoC manufacturer and use several additional countermeasures to help these customers to randomize countermeasures between the devices that they acquired. An example of randomly selected countermeasures for a plurality of devices is provided in FIG. 2.

FIG. 2 illustrates randomly selected countermeasures in a plurality of devices 82 from a hardware manufacturer 81 in accordance with an embodiment. Hardware manufacturer 81 fabricates plurality of devices 82, which may be e.g., system on a chip (SoC), devices. Devices 82 are supplied to application developers. The devices each include countermeasures x, y, and z, which are configured in devices 82 by HW manufacturer 81. Hardware manufacturer 81 randomizes countermeasures x, y, and z between developers to ensure that any templates created by attackers for the devices will not be effectively used with all the devices 82. The SoCs 82 may be provided to various application developers 83 in batches, the batches including the number of SoCs desired by each developer. Each batch of SoCs includes countermeasures x, y, and z. Each application developer will receive a batch of SoCs 82 having different combinations of the countermeasures enabled. For example, in FIG. 2, application developer 0 receives a batch of SoCs having countermeasures x and y enabled (ON) and countermeasure z disabled (OFF), and application developer 1 receives a batch of SoCs having countermeasures x and z ON and countermeasure y OFF. Using different enabled sets of countermeasures x, y, and z reduces the likelihood that a template created on an example of one batch of devices from one application developer will work properly with a batch of devices from another application developer. In addition to the randomly selected countermeasures loaded by HW manufacturer 81, the application developers may also load countermeasures onto the devices they receive. As a simple example, countermeasures A, B, and C may be used by multiple application developers in their devices. Countermeasures A, B, and C may be provided to the application developers by HW manufacturer 81 or may be acquired by the application developers from a different source. For example, application developer 0 may divide a batch of devices 85 into multiple portions 86 - 89, where each portion may have a different set of countermeasures A, B, and C enabled. The different portions of devices 85 may be, e.g., sold to customers of application developer 0. For example, application developer 0 may enable countermeasure A for all portions 86 - 89 and enable different combinations of countermeasures B and C for portions 86 - 89. Also note that the devices provided to application developer 0 from HW manufacturer 81 also includes countermeasures x, y, and z enabled as shown in FIG. 2. As another example, application developer 1 may randomly switch countermeasures A and B ON and OFF for different SoCs of batch 84, while countermeasure C is not used for any of SoCs of batch 84.

In another embodiment, some countermeasures of a device are always ON, or enabled, depending on the device's unique ID (like in a fixed scheme) and some countermeasures are randomly selected (like in a fully random scheme). The two sets of configurations can be different. In this scenario, the transfer of templates from one device to another may become even more difficult because in addition to having different countermeasures always ON, each time a device is used, additional randomly chosen countermeasures are enabled. A drawback of this scheme is that it may require more countermeasures to be implemented. Moreover, this scheme can be used to prevent transferability of templates from devices of one vendor to devices of another vendor. For example, a company M manufactures and sells microcontrollers while companies A and B buy the same microcontrollers from manufacturer M to put in completely different products. Companies A and B can have different sets of countermeasures that are always ON. This way an attacker will not be able to transfer a template created using a device from the company A to a device from the company B even if both companies A and B use the same devices, e.g., microcontrollers from manufacturer M.

In addition to being used to protect against SCA, the disclosed method can also be used to protect against other types of attacks, such as fault injection attacks. In order to mount a fault injection attack, the attacker must target a specific area of the integrated circuit die and inject the fault at exactly the correct time during operation of the device. The use of randomly chosen countermeasures can help to prevent an attacker from analyzing signal timing, and thus make the fault injection attack more difficult.

FIG. 3 illustrates a configurable countermeasure system 20 in accordance with another embodiment. Configurable countermeasure system 20 includes RNG 22, enablement circuit 24, and plurality of countermeasures 26. As an example, plurality of countermeasures 26 includes countermeasures A - D. Random number generator 22 may be implemented as described above regarding randomization circuit 12 in FIG. 1. Also, plurality of countermeasures 26 may be the same or similar to plurality of countermeasures 11. Generally, RNG 22 generates a random value 23. For example, as illustrated in FIG. 3, the random value 23 may be the number "5". Random value 23 is provided to enablement circuit 24, which may be implemented to use a binary representation 25 of random value 23 to randomly enable a set of plurality of countermeasures 26. As illustrated in FIG. 3, the binary representation of value "5" using 4 bits is 0101. In enablement circuit 53, the binary representation 25 is used to generate enable signals that enable or disable the countermeasures. In the illustrated embodiment, each bit is used to enable or disable one of the plurality of countermeasures A - D. For example, the right most bit in enablement circuit 24 is a "1". As illustrated, the binary value "1" provides an enable signal labeled "ON" to enable countermeasure A. Likewise, the other three binary of the 4 bits enable countermeasure C and disable countermeasures B and D. In another embodiment, countermeasures are enabled with a "0" bit and disabled with a "1" bit. Enablement circuit 24 only shows binary representation 25 with enable signals running from each bit to a countermeasure. However, one skilled in the art would know that enablement circuit 24 includes additional circuits (not shown), such as logic and drivers to generate the enable signals from the bit values.

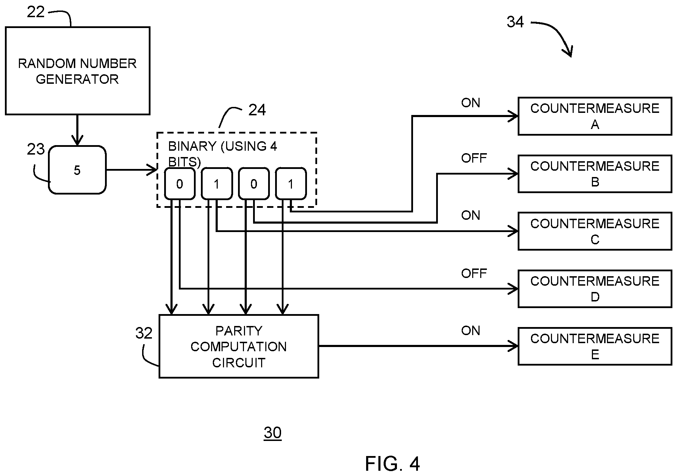

FIG. 4 illustrates a configurable countermeasure system 30 in accordance with another embodiment. Configurable countermeasure system 30 is similar to configurable countermeasure system 20 except that a parity bit is computed by parity computation circuit 32 to enable a countermeasure E of plurality of countermeasures 34. In some embodiments, it may be desirable to ensure that at least one countermeasure is always enabled. Many ways exist to ensure that at least one countermeasure is always ON. One way is to simply choose one or several countermeasures to be always ON, such that the countermeasure selection in "fixed". Another way is to have one or several countermeasures to be turned ON and OFF in a complementary manner, e.g., if countermeasure A is ON then countermeasure B is OFF and when countermeasure A is OFF then countermeasure B is ON. Other approaches can be used, for example, in FIG. 4 with 5 countermeasures, 4 bits can be used to turn ON or OFF 4 countermeasures A, B, C and D. A combination of the 4-bits can then be used to compute a parity bit, and the parity bit used to turn ON countermeasure E according to a parity rule. In one example parity rule as shown in the example of the table below, if the 4-bit value for countermeasures A - D has an even number of ones, then parity computation circuit 32 computes a "1" parity bit, and if the number of ones is odd, then the parity bit is "0". As a specific example, countermeasure E is turned ON in the table if the number of countermeasures among A, B, C and D that are turned ON is an even number, see all cases the table below. This approach ensures that at least one countermeasure is always ON. The example below has 1 countermeasure always ON, but it's possible to come up with a similar system where additional countermeasures are always ON. In the table below, a "1" means enabled, and a "0" means disabled. The countermeasure names A - E are in the first row.

**TABLE**

| **A** | **B** | **C** | **D** | **E (computed parity)** |
|---|---|---|---|---|
| 0 | 0 | 0 | 0 | 1 |
| 0 | 0 | 0 | 1 | 0 |
| 0 | 0 | 1 | 0 | 0 |
| 0 | 0 | 1 | 1 | 1 |
| 0 | 1 | 0 | 0 | 0 |
| 0 | 1 | 0 | 1 | 1 |
| 0 | 1 | 1 | 0 | 1 |
| 0 | 1 | 1 | 1 | 0 |
| 1 | 0 | 0 | 0 | 0 |
| 1 | 0 | 0 | 1 | 1 |
| 1 | 0 | 1 | 0 | 1 |
| 1 | 0 | 1 | 1 | 0 |
| 1 | 1 | 0 | 0 | 1 |
| 1 | 1 | 0 | 1 | 0 |
| 1 | 1 | 1 | 0 | 0 |
| 1 | 1 | 1 | 1 | 1 |

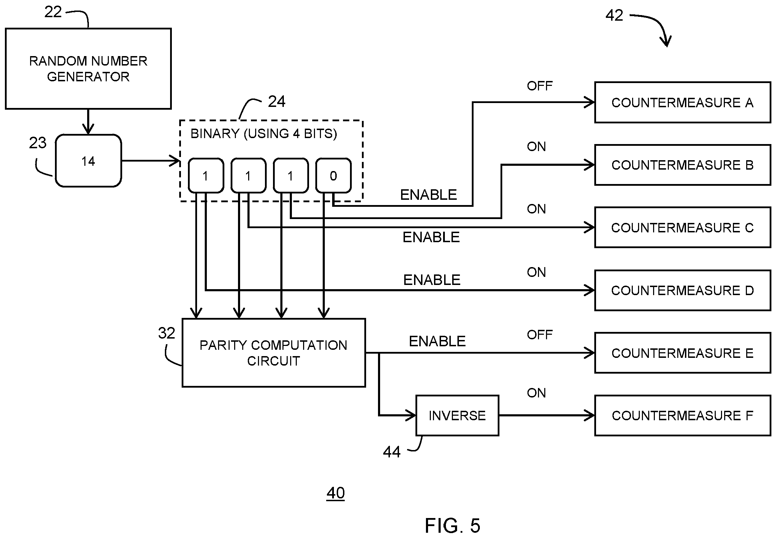

FIG. 5 illustrates a configurable countermeasure system 40 in accordance with another embodiment. The embodiment of FIG. 5 is the same as the embodiment of FIG. 4, except that configurable countermeasure system 40 provides for random enablement of countermeasures that cannot be enabled at the same time. As an example, RNG 22 provides random value 14 which has 1110 as a binary representation in enablement circuit 24. As can be seen in FIG. 5, countermeasures E and F are not enabled at the same time. This is accomplished by using an inverse circuit 44 to invert the parity enable signal that is sent to countermeasure E. This causes countermeasure F to be enabled at the same time countermeasure E is disabled, and vice versa.

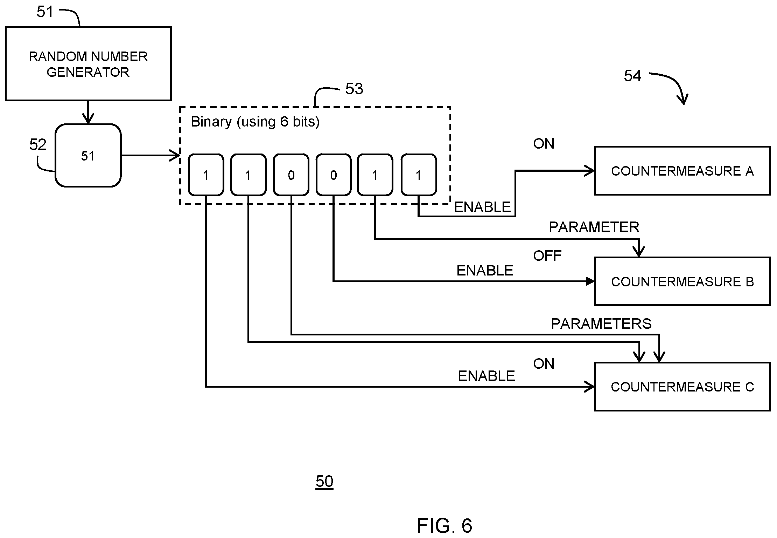

FIG. 6 illustrates configurable countermeasure system 50 in accordance with an embodiment. Configurable countermeasure system 50 includes RNG 51 that provides a random value 52. The random value 52 is provided to enablement circuit 53. A plurality of countermeasures 54 includes countermeasures A - C. As an example, the random value is 51, and a binary representation in 6-bits is 110011. From left to right in FIG. 6, the first bit, fourth bit, and sixth bit are enable bits, and the second, third, and fifth bits are for enabling parameters for use by the corresponding countermeasures. For example, countermeasure C receives parameters enabled and disabled by the second and third bits, and countermeasure B receives a parameter enabled and disabled by the fifth bit. FIG. 6 shows 6-bits, other embodiments may use more or less than 6-bits depending on the number of countermeasures and parameters.

Some countermeasures in a device may require parameters for proper operation in the device. For example, a masking scheme for a block cipher may be applied only on the first round, on the first and the last round, on the first two and last two rounds, or on all rounds. Side-channel attacks tend to focus on the first or last rounds in the case of a block cipher. In such a scenario the enabled countermeasures need to receive parameters for their enablement. The enablement of these parameters is randomized by using additional bits in the binary representation of enablement circuit 53. The randomization circuits described earlier can deliver additional random bits for each enabled countermeasure that might need them. One very simple way of implementing this approach is to always generate and deliver enable signals to all countermeasures that might need parameters and only actually use these values if the countermeasure is enabled. Another way to implement countermeasures that use parameters is illustrated in FIG. 6. Configurable countermeasure system 50 is relatively simple to implement, but requires more random bits to be generated, some of which may not be used if a countermeasure with parameters is not activated. However, it is also possible to generate additional randomness only for the enabled countermeasures.

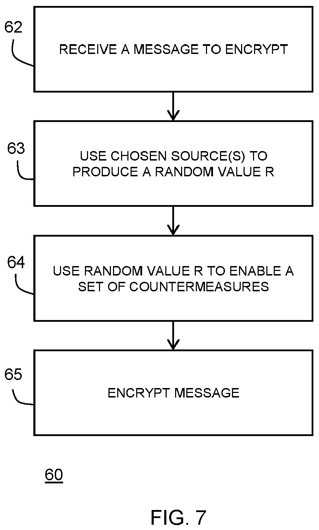

FIG. 7 illustrates method 60 for protecting an encryption operation in a device from an SCA in accordance with an embodiment. Method 60 begins at step 62. At step 62, a message is received that needs to be encrypted. Method 60 may be used each time a message is received for encryption. Generally, an encryption operation requires the use of an encryption key. An attacker may be able to use a SCA to extract the encryption key. The attacker may attempt to recreate a template of the device as described above to help improve the likelihood of success. The described embodiments make it more difficult for the attacker to create a template. At step 63, a source is chosen from a plurality of sources to produce a random value R. The random value R may be in a binary form having a predetermined number of bits. At step 64, random value R is used to enable a set of SCA countermeasures from a plurality of countermeasures. One or more of the plurality of countermeasures may be enabled in the device. At step 65, the message is encrypted. Method 60 is repeated each time a message is received that needs to be encrypted. In another embodiment, method 60 can be used anytime a secret key is used.

A variety of configurations will increase the protection against SCAs but will not completely eliminate vulnerability to SCAs. An attacker with enough knowledge, time, and power would still be able to create a model for a template attack regardless of the amount of protection. To make an attack more difficult, a device will be better protected if the configuration of the countermeasures cannot be controlled by a software developer or the operating system (OS), otherwise an attacker will be able to switch them off completely or fix one set of countermeasures which will allow for easier profiling. Thus, the randomization and enablement of the countermeasures should only be controlled by the device itself (e.g., by the cryptographic engine).

Note, that an attacker may try to collect a lot of data and cluster the traces hoping to combine traces that were collected using the same set of countermeasures. This will allow the attacker to create a better profiling set. But it still requires running the clustering and to run it on the target device. The clustering might not be perfect but might still help the attacker.

Several slightly different ways of using the idea are possible. For example, the configuration of countermeasures may be changed on every single encryption operation or after several encryption operations. From the point of view of an attacker it is easier to attack an implementation in which the same set of countermeasures (same configuration) is used for a period of time before switching to a different one. This is because the attacker might find out about it and thus use this information to verify the quality of the clusters and improve them. For example, the attacker will be able to check that sequentially acquired traces are in the same cluster.

In another embodiment, this technique may be used in parallel with some additional countermeasures that are fully controlled by a software developer, but these software-controlled countermeasures can be ultimately controlled by an attacker in some scenarios. Similarly, when a countermeasure is enabled or disabled, it is possible that the configuration for this countermeasure is not chosen at random but depends on some context, such as whether protection is intended for, e.g., a secure boot or a simple packet encryption for transport layer security (TLS) using software. However, such configurations can also be controlled by an attacker in some scenarios.

Note, in another embodiment, the setup procedure for the configuration may be enabled for device developers. For example, the device developer that acquires microcontrollers would be able to specify if some countermeasures should always be enabled or if the countermeasures should be switched randomly such as for every encryption or fixed for different devices based on their unique ID.

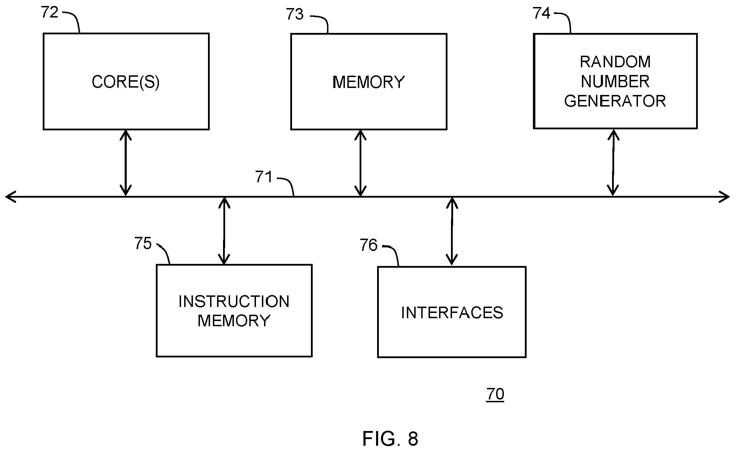

FIG. 8 illustrates data processing system 70 for use in a device to be protected from a SCA in accordance with an embodiment. Data processing system 70 may be implemented using one or more integrated circuits and may be used in an implementation of the described embodiments. Data processing system 70 includes bus or switching network 71 useful for communicating information between circuits of data processing system 70. In one example, data processing system 70 may be a system on a chip (SoC). In another embodiment, data processing system 70 may include multiple chips, or integrated circuits (ICs). Connected to bus 71 is one or more processor cores 72, memory 73, random number generator 74, instruction memory 75, and interfaces 76. The one or more processor cores 72 may include any hardware device capable of executing instructions stored in memory 73 or instruction memory 75. For example, processor cores 72 may execute encryption and/or decryption algorithms in the illustrated embodiment. Processor cores 72 may be, for example, a microprocessor, field programmable gate array (FPGA), application-specific integrated circuit (ASIC), or similar device. Processor cores 72 may be implemented in a secure hardware element and may be tamper resistant.

Memory 73 may be any kind of memory, such as for example, L1, L2, or L3 cache or system memory. Memory 73 may include volatile memory such as static random-access memory (SRAM) or dynamic RAM (DRAM), or may include non-volatile memory such as flash memory, read only memory (ROM), or other volatile or non-volatile memory. Also, memory 73 may be implemented in a secure hardware element or other type of secure storage. Alternately, memory 73 may be a hard drive implemented externally to data processing system 70. Memory 73 may be used to store a plurality of SCA countermeasures according to an embodiment.

Random number generator 74 may be any type of software or circuit for providing a random value for selecting a set of SCA countermeasures. For example, RNG 74 may be a TRNG, a PRNG, a hash function, a simple counter, PUF, etc.

Instruction memory 75 may include one or more non-transient machine-readable storage media for storing instructions for execution by processor cores 72. In other embodiments, both memories 73 and 75 may store data upon which processor cores 72 may operate. Memories 73 and 75 may also store, for example, encryption, decryption, and verification applications. Memories 126 and 130 may be implemented in a secure hardware element and be tamper resistant.

Interface 76 may be connected to one or more circuits for enabling communication with a user such as an administrator. Interface 76 may include interfaces for coupling to a display, a mouse, a keyboard, or other input/output device. Interfaces 76 may include one or more circuits for enabling communication with other hardware devices. For example, interfaces 76 may include, or be coupled to, a network interface card (NIC) configured to communicate according to the Ethernet protocol. Also, interfaces 76 may implement a TCP/IP stack for communication according to the TCP/IP protocols. Data samples for classification may be input via interfaces 76. Various other hardware or configurations for communicating are available.

Various embodiments, or portions of the embodiments, may be implemented in hardware or as instructions on a non-transitory machine-readable storage medium including any mechanism for storing information in a form readable by a machine, such as a personal computer, laptop computer, file server, smart phone, or other computing device. The non-transitory machine-readable storage medium may include volatile and non-volatile memories such as read only memory (ROM), random access memory (RAM), magnetic disk storage media, optical storage medium, flash memory, and the like. The non-transitory machine-readable storage medium excludes transitory signals.

Although the invention is described herein with reference to specific embodiments, various modifications and changes can be made without departing from the scope of the present invention as set forth in the claims below. Accordingly, the specification and figures are to be regarded in an illustrative rather than a restrictive sense, and all such modifications are intended to be included within the scope of the present invention. Any benefits, advantages, or solutions to problems that are described herein with regard to specific embodiments are not intended to be construed as a critical, required, or essential feature or element of any or all the claims.

Furthermore, the terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles. The terms "circuit" and "circuitry" may refer to hardware, software, or a combination of hardware and software.

Unless stated otherwise, terms such as "first" and "second" are used to arbitrarily distinguish between the elements such terms describe. Thus, these terms are not necessarily intended to indicate temporal or other prioritization of such elements. The term "coupled," as used herein, is not intended to be limited to a direct coupling or a mechanical coupling.

## Claims

1. A method for protecting an electronic device from a side-channel attack (SCA), the method comprising:
providing a plurality of countermeasures for protecting the electronic device from the SCA; and
randomly enabling a set of countermeasures during operation of the electronic device, the set of countermeasures comprising one or more countermeasures of the plurality of countermeasures.

2. The method of claim 1, wherein randomly enabling further comprises randomly enabling a different set of countermeasures each time a message is encrypted or decrypted by the electronic device.

3. The method of claim 1 or 2, wherein the plurality of countermeasures includes two or more of a group comprising a masking scheme, noise generator, shuffling scheme, and insertion of dummy operations.

4. The method of any preceding claim, wherein one or more additional countermeasures are enabled based on a parity bit generated in response to whether an odd or even number of countermeasures are enabled in the set of countermeasures.

5. The method of any preceding claim, wherein randomly enabling further comprises generating a random number and using the random number to enable the set of countermeasures.

6. The method of claim 5, wherein the one or more of the plurality of countermeasures receives a parameter based on the random number.

7. The method of claim 5 or 6, wherein generating the random number comprises using a random number generator with one or more of a device identifier, a physical unclonable function (PUF), a counter, and an encryption key as a seed value.

8. The method of any preceding claim, wherein the plurality of countermeasures includes one or more countermeasures that are always enabled and one or more of the countermeasures are randomly selected.

9. The method of any preceding claim, wherein randomly enabling further comprises randomly enabling a different set of countermeasures for each electronic device of a plurality of electronic devices during manufacturing.

10. The method of any preceding claim, wherein the electronic device includes an integrated circuit that performs the method.

11. An electronic device comprising:
a memory configured to store a plurality of countermeasures for protecting against a side-channel attack (SCA);
a random number generator configured to generate a random number; and
an enablement circuit configured to enable a set of countermeasures in response to the random number, wherein the set of countermeasures comprising one or more of the plurality of countermeasures.
